(19) **Europäisches Patentamt**
**European Patent Office**
**Office européen des brevets**

(11) **EP 1 833 019 A2**

(12) **EUROPEAN PATENT APPLICATION**

(43) Date of publication:
**12.09.2007 Bulletin 2007/37**

(51) Int Cl.:
*G06T 5/40* (2006.01)     *G06T 5/10* (2006.01)

(21) Application number: **07250836.9**

(22) Date of filing: **28.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.03.2006 JP 2006060266**

(71) Applicant: **KABUSHIKI KAISHA TOSHIBA**
**Tokyo 105-8001 (JP)**

(72) Inventor: **Yokoi, Kentaro**
**c/o Intellectual Property Division**
**Tokyo (JP)**

(74) Representative: **Granleese, Rhian Jane**
**Marks & Clerk**
**90 Long Acre**
**London WC2E 9RA (GB)**

(54) **Apparatus for detecting a varied area and method of detecting a varied area**

(57)     A first variation detecting unit, a second variation detecting unit and a varied area integrating unit that integrates results of variation detection of these units are provided. The first variation detecting unit judges a variation in an input image using brightness difference code of the brightness difference between respective pixels in a learned image and peripheral pixels thereof and brightness difference code of the input image, and the second variation detecting unit detects the variation of the brightness difference between the target pixel and the reference pixels in the input image on the basis of the stored positions of the reference pixels on the basis of the reference pixels having a predetermined brightness difference with respect to the respective pixels located in a plurality of directions from the respective pixels in the learned image.

FIG. 1

**Description**

CROSS-REFERENCE TO RELATED APPLICATIONS

This application is based upon and claims the benefit of priority from the prior Japanese Patent Application No. 2006-60266, filed on March 6. 2006; the entire contents of which are incorporated herein by reference.

TECHNICAL FIELD

The present invention relates to an apparatus and a method for detecting a varied area that compares a learned image in the normal state with a current input image and extracts an area where a change has occurred.

BACKGROUND OF THE INVENTION

In the related art, there are technologies for detecting a varied area as shown below.

One is Background Subtraction method that detects a varied area on the basis of a learned average background image and the brightness difference of an input image (See Kentaro Toyama, John Krumm, Barry Brumitt, and Brian Meyrrs. Wallflower: Principles and practice of background maintenance. Proceedings of the 7th IEEE International Conference on Computer Vision (ICCV 1999), pp.255-261, September 1999).

There is also Peripheral Increment Sign Correlation that detects a varied area on the basis of the difference between a learned background texture and an input image texture (See Yutaka Sato, Shunichi Kaneko, Satoru Igarashi. Detection and Separation of a robust object on the basis of Peripheral Increment Sign Correlation, Transactions of The Institute of Electronics, Information and Communication Engineers, Vol.J84-D-II, No.12, pp.2585-2594, December 2001, hereinafter referred to as "Sato-1"). "Robust Object Detection and Segmentation by Peripheral Increment Sign Correlation Image", Yutaka Satoh, Shun'ichi Kaneko, Satoru Igarashi, "Systems and Computers in Japan, John Wiley & Sons", vol. 35, no.9, pp.70-80, June 2004 corresponds to English translation of Sato-1.

There is also BPRRC (Bi-polar radial reach correlation) method that searches reference pixels which have more than a certain extent of brightness difference in positive and negative from a target image in eight directions, and extracts the varied area on the basis of whether the positive and negative of the brightness difference are also stored in the input image (See Yutaka Sato, Katsuhiko Sakagami, Robust Background Subtraction by Bi-polar radial reach correlation, IEICE PRMU2004-224, pp.73-78, March 2005, hereinafter referred to as "Sato-2"). "Robust Background Subtraction based on Bi-polar Radial Reach Correlation", Yutaka Satoh, Katsuhiko Sakaue, "Proceedings of the IEEE International Conference on Computers, Communications, Control and Power Engineering (TENCON05)", 998-1003, November 2005 corresponds to English translation of Sato-2.

In the background subtraction method, there is a problem such that a total brightness change due to variations of illumination is erroneously detected as the movement of a person or the like.

In the peripheral increment sign correlation has a problem such that the brightness difference between the target pixel and the peripheral reference pixels is small, and hence erroneous detection may occur often when the brightness difference is liable to be inverted due to the variation of illumination or noises.

The BPRRC method has a problem that omission of detection can occur easily because it can only detect a remarkable difference which could invert the brightness difference between the target pixel and the reference pixels.

BRIEF SUMMARY OF THE INVENTION

In view of the problems described above, as an embodiment of the present invention, there is provided an apparatus for detecting a varied area and a method thereof which is robust against variation in illumination or noises, and can extract the varied area and in which excessive detection and omission of detection are reduced.

According to embodiments of the present invention, this embodiment is an apparatus for detecting a varied area in an input image, comprising:

a first encoder that generates first brightness difference codes by encoding the brightness differences between a first target pixel in a learned image and respective first peripheral pixels in the periphery thereof into three-value brightness difference codes which respectively indicate a case in which they are smaller than a threshold value TH1, a case in which they are in the range from the threshold value TH1 to a threshold value TH2, and a case in which they are larger than the threshold value TH2;

a second encoder that generates second brightness difference codes by encoding the brightness differences between a second target pixel in the input image which corresponds to the first target pixel and respective second peripheral pixels in the periphery thereof into three-value brightness difference codes which respectively indicate a case in which they are smaller than the threshold value TH1, a case in which they are in the range from the threshold value TH1 to the threshold value TH2, and a case in which they are larger than the threshold value TH2;

a first judging unit that obtains a first variation result by judging the presence or absence of variation for the respective second peripheral pixels in the input image on the basis of the difference between the first brightness difference codes and the second brightness difference codes;

a first searching unit that searches pixels whose brightness difference from the first target pixel is not larger than a threshold value TH3 and pixels whose brightness difference from the first target pixel is not smaller than a threshold value TH4 from the first target pixel in the learned image in the plurality of directions and stores the same respectively as learned reference pixels;

a second judging unit that obtains a second variation result by judging the presence or absence of variation in the respective second peripheral pixels in the input image on the basis of whether or not there is a change between the brightness difference between the first target pixel in the learned image and the learned reference pixels and the brightness difference between the second target pixel in the input image and the input reference pixels as pixels in the input image which correspond to the learned reference pixels; and

an integrating unit that determines the presence or absence of variation for the respective second peripheral pixels in the input image on the basis of the first variation result and the second variation result.

BRIEF DESCRIPTION OF THE DRAWINGS

Fig. 1 is a block diagram of an apparatus for detecting a varied area according to an embodiment of the invention;
Fig. 2 is an example of a flow of a learning process of the same;
Fig. 3 is an example of a flow of a detecting process of the same;
Fig. 4 illustrates a target pixel and peripheral pixels;
Fig. 5 illustrates search of reference pixels; and
Fig. 6 is an explanatory drawing for describing stabilization by three-value encoding.

DETAILED DESCRIPTION OF THE INVENTION

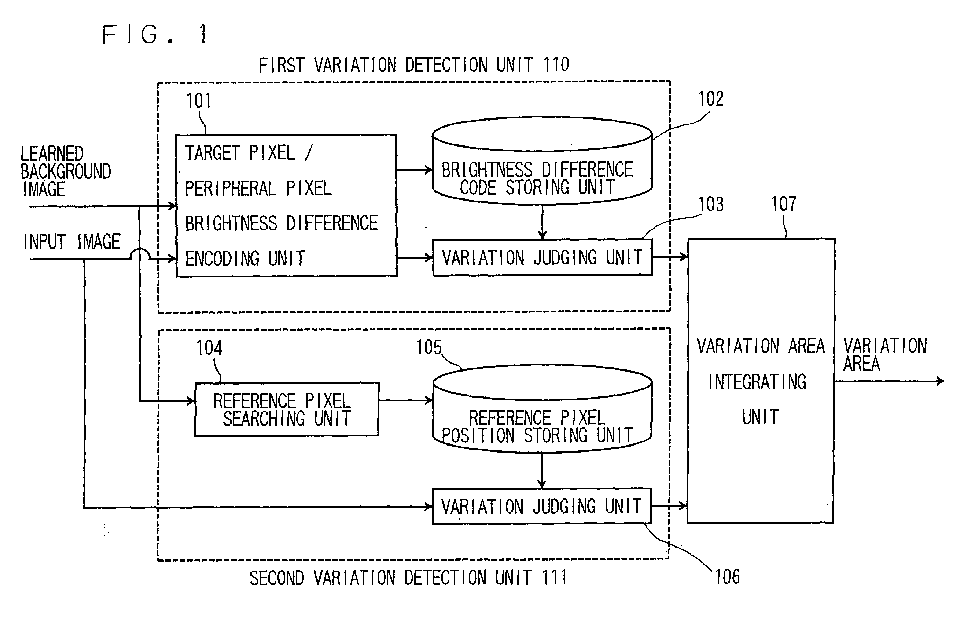

Referring now to Fig. 1 to Fig. 6, an apparatus for detecting a varied area according to an embodiment of the invention will be described.

(1) Configuration of the apparatus for detecting a varied area

Fig. 1 is a block diagram showing a general configuration of the apparatus for detecting a varied area in this embodiment.

The apparatus for detecting a varied area includes a first variation detecting unit 110, a second variation detecting unit 111 and a varied area integrating unit 107 that integrates results of variation detection of these two units.

The first variation detecting unit 110 includes a target pixel/peripheral pixel brightness difference encoding unit 101 that judges the brightness difference between the target pixel and the peripheral pixels and encoding the same, a brightness difference code storing unit 102 that stores brightness difference codes in a learned image, and a variation judging unit 103 that judges the variation in the input image on the basis of the brightness difference codes between the learned image and the input image.

The second variation detecting unit 111 includes a reference pixel searching unit 104 that searches pixels having the brightness difference located in a plurality of directions from the target pixel in the learned image, a reference pixel position storing unit 105 that stores the positions of the reference pixels, and a variation judging unit 106 that detects the variation of the brightness difference between the target pixel and the reference pixels in the input image on the basis of the stored positions of the reference pixels.

The apparatus for detecting a varied area can also be realized by using, for example, a general computer apparatus as basic hardware. In other words, the first variation detecting unit 110, the second variation detecting unit 111 and the varied area integrating unit 107 can be realized by causing a processor installed in the above-described computer apparatus to execute programs.

(2) Learning process

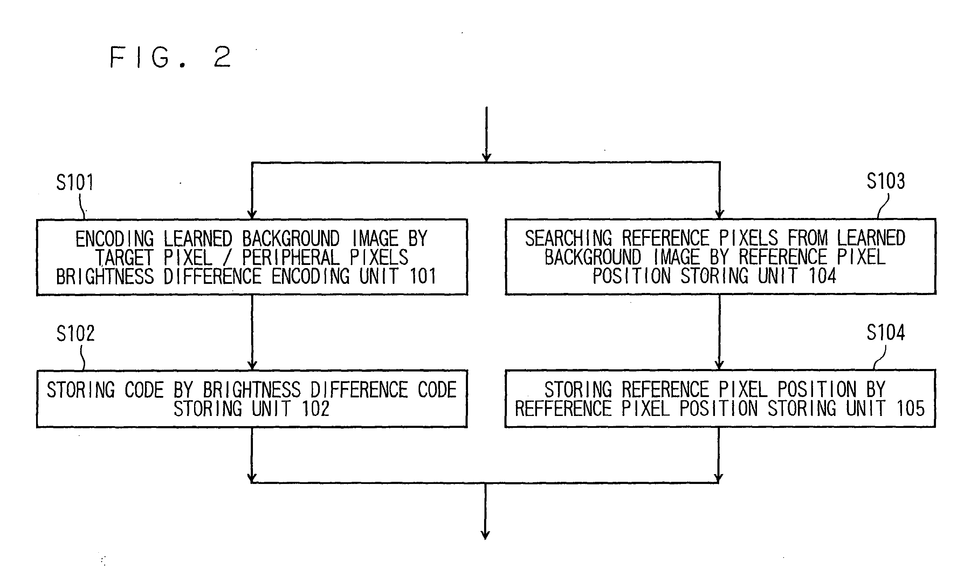

Fig. 2 is a general drawing showing a flow of a learning process. Referring now to Fig. 2, the leaning process will be described. When the learning process is executed, the learned image to be compared with the input image as an object to be detected is supplied from an image input device such as a video camera to the first variation detecting unit 110 and the second variation detecting unit 111 respectively. The leaned image is, for example, a background image of a room in a state in which there is no incomer.

In Step S101, the target pixel/peripheral pixel brightness difference encoding unit 101 executes encoding on the basis of the brightness difference between and the target pixel and the peripheral pixels in the learned image.

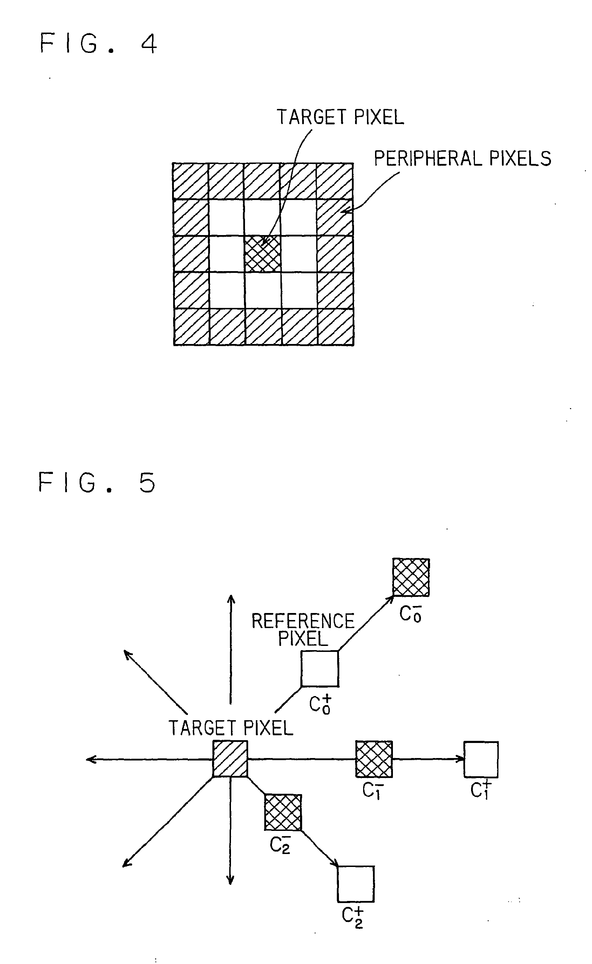

The peripheral pixels may be pixels, for example, at the coordinates (x+2, y-2), (x+2, y-1), ... (x+1, y2) which is located at two pixels apart from the target pixel as shown in Fig. 4, where (x, y) represents the coordinate of the target pixel, and the I(x, y) represents the brightness value thereof. The target pixel/peripheral pixel brightness difference encoding unit 101 encodes sixteen peripheral pixels to -1 when the brightness differences from the target pixel are smaller than TH1, to 0 when they are in the range from TH1 to TH2, and 1 when they are larger than TH2 respectively and hence to;

$$bi(x, y) \ (where \ i=0, \ ..., \ 15).$$

[Expression 1]

$$b_0(x,y) = \begin{cases} -1 (when \ I(x+2,y-2)-I(x,y) < TH1) \\ 0 (when \ TH1 \leq I(x+2,y-2)-I(x,y) \leq TH2) \\ 1 (when \ TH2 < I(x+2,y-2)-I(x,y)) \end{cases}$$

$$b_{15}(x,y) = \begin{cases} -1 (when \ I(x+1,y-2)-I(x,y) < TH1) \\ 0 (when \ TH1 \leq I(x+1,y-2)-I(x,y) \leq TH2) \\ 1 (when \ TH2 < I(x+1,y-2)-I(x,y)) \end{cases}$$

Subsequently, in Step S102, the brightness difference code storing unit 102 stores the brightness difference codes $bi(x, y)$. When there are a plurality of the learned images, an average values of the brightness difference codes $bi(x, y)$ obtained from the respective images may be stored. Here, the processes in Step S101 and Step S102 for the target pixel $I(x, y)$ are performed for all the pixels in the learned image.

Subsequently, in Step S103, the reference pixel searching unit 104 searches the reference pixels in the learned image in the same manner as the method in Sato's Document 2. Reference pixels $ci^-(x, y)$ having the brightness difference from the target pixel by the threshold value TH3 or smaller (where i=0, ..., 7) and reference pixels $ci^+(x, y)$ having the brightness difference therefrom by the threshold value TH4 or larger (where i=0, ..., 7) are searched in a plurality of directions (for example, eight directions) from the target pixel $I(x, y)$ (see Fig. 5).

Subsequently, in Step S104, the reference pixel position storing unit 105 stores the positions of the reference pixels, $ci^-(x, y)$ and $ci^+(x, y)$. Here, the processes in Steps S103 and S104 for the target pixel $I(x, y)$ are executed for all the pixels in the learned image.

(3) Detecting process

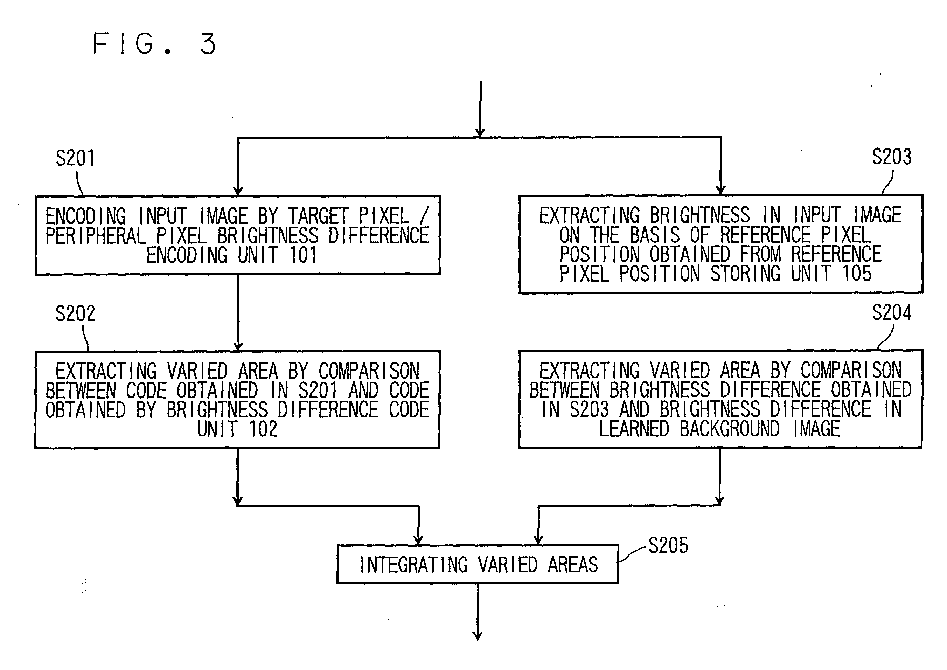

Fig. 3 is a diagram showing a general flow of the detecting process. The detecting process will be described on the basis of Fig. 3 below. When performing the detecting process, the input image as the object to be detected is supplied from the image input device such as a video camera to the first variation detecting unit 110 and the second variation detecting unit 111 respectively. The input image may be, for example, an image of the room in the current state, and the object to be detected is an incomer to this room.

In Step S201, the target pixel/peripheral pixel brightness difference encoding unit 101 executes encoding on the basis of the brightness difference between the target pixel and the peripheral pixels in the input image. The encoding process is achieved by the same process as the learning process.

Subsequently, in Step S202, the variation judging unit 103 compares a code $b_i^{in}(x, y)$ obtained in Step S201 (where i=0, ...,15) and a code $b_i^{bg}(x, y)$ of the learned image stored in the brightness difference code storing unit 102 (where i=O ..., 15) for the target pixel I (x, y). When the sum of the degrees of disagreement between these codes B(x, y) exceeds a certain threshold value THb, the target pixel I(x, y) is judged to be a varied area.

[Expression 2]

$$Result_b(x,y)=\begin{cases} \text{varied (when } (B(x,y) \geq TH_b) \\ \text{not varied (other cases)} \end{cases}$$

$$B(x,y)=\sum_{i=0}^{15}|b_i^{in}(x,y) - b_i^{bg}(x,y)|$$

Subsequently, in Step S203, the variation judging unit 106 extracts the brightness difference between the target pixel and the reference pixels in the input image on the basis of the reference pixel positions stored in the reference pixel position storing unit 105.

Subsequently, in Step S204, when a number C(x, y) of a group whose brightness difference from the reference pixel $c_i^-(x, y)$ (where i=0, ..., 7) is TH5 or larger, or whose brightness difference from $c_i^+(x, y)$ (where i=0, ..., 7) is TH6 or smaller exceeds a certain threshold THc, the target pixel I(x, y) is judged to be a varied area (Step S204).

[Expression 3]

$$\mathrm{Result}_c(x,y) = \begin{cases} \mathrm{varied} \ (\mathrm{when} \ (C(x,y) \geq \mathrm{TH}_c) \\ \mathrm{not \ varied} \ (\mathrm{other \ cases}) \end{cases}$$

$$C(x,y) = \sum_{i=0}^{7} c_i^+(x,y) + \sum_{i=0}^{7} c_i^-(x,y)$$

$$c_i^-(x,y) = \begin{cases} 1 \ (\mathrm{when} \ c_i^-(x,y) - I(x,y) \geq \mathrm{TH5}) \\ 0 \ (\mathrm{other \ cases}) \end{cases}$$

$$c_i^+(x,y) = \begin{cases} 1 \ (\mathrm{when} \ c_i^+(x,y) - I(x,y) \leq \mathrm{TH6}) \\ 0 \ (\mathrm{other \ cases}) \end{cases}$$

A case in which $c_i^-(x, y) = 1$ in the second formula in Expression 3 is satisfied is a case in which the brightness difference $c_i^-(x, y) - I(x, y) <= \mathrm{TH3}$ in the learned image is changed to $c_i^-(x, y) - I(x, y) => \mathrm{TH5}$ in the input image. In this case, the relation of the brightness differences is significantly change, it is judged that a variation has occurred. For example, when TH3 = TH5 = 0, the group having a large variation that could invert the brightness difference between $c_i^-(x, y)$ and $I(x, y)$ is counted by the second formula in Expression 3.

Subsequently, in Step S205, the variation area integrating unit 107 integrates a result $\mathrm{Result}_b(x, y)$ obtained in Step S202 and a result $\mathrm{Result}_c(x, y)$ obtained in Step S204. For example, see Expression 4.

[Expression 4]

$$\mathrm{Result}(x,y) = \begin{cases} \mathrm{varied} \ (\mathrm{when} \ \mathrm{Result}_b(x,y) \ \mathrm{is} \ \mathrm{varied} \\ \qquad \mathrm{or} \ \mathrm{Result}_c(x,y) \ \mathrm{is} \ \mathrm{varied}) \\ \mathrm{not \ varied} \ (\mathrm{other \ cases}) \end{cases}$$

(4) Effects of the two variation detecting units 110, 111

Since the first variation detecting unit 110 detects the variation on the basis of the brightness difference between the target pixel and the peripheral pixels, that is, the texture (pattern which includes a change in brightness), the detection performance is high when there is a texture in at least one of the learned image and the input image. However, when there is a little texture in both the learned image and the input image, omission of detection may often occur. On the other hand, the second variation detecting unit 111 searches the reference pixels having the brightness difference in eight directions, even though there is a little texture in both the learned image and the input image, the detecting performance can be maintained by comparing with the reference pixels located relatively apart therefrom. However, since it can only detect relatively large variations which could invert the brightness difference, the omission of detection may easily occur. In other words, when these units are employed independently, there arises a problem such that the possibility of occurrence of the omission of detection increases.

However, since the first variation detecting unit 110 demonstrates a high detection performance when at least one of the learned image and the input image has a texture, and the second variation detecting unit 111 demonstrates a relatively high detection performance when both the learned image and the input image have only a little texture, both units gives high complementary effects. In other words, the area which cannot be detected by one of these units can be detected by the other unit. In addition, since there is a low possibility of excessive detection (to detect the area having no variation as having varied) in both units, the excessive detection can hardly be increased even though these units are combined. In other words, the combination of these two units has an advantage such that the omission of detection can be reduced while restraining the excessive detection.

(5) Effects of stabilization by the three-value encoding

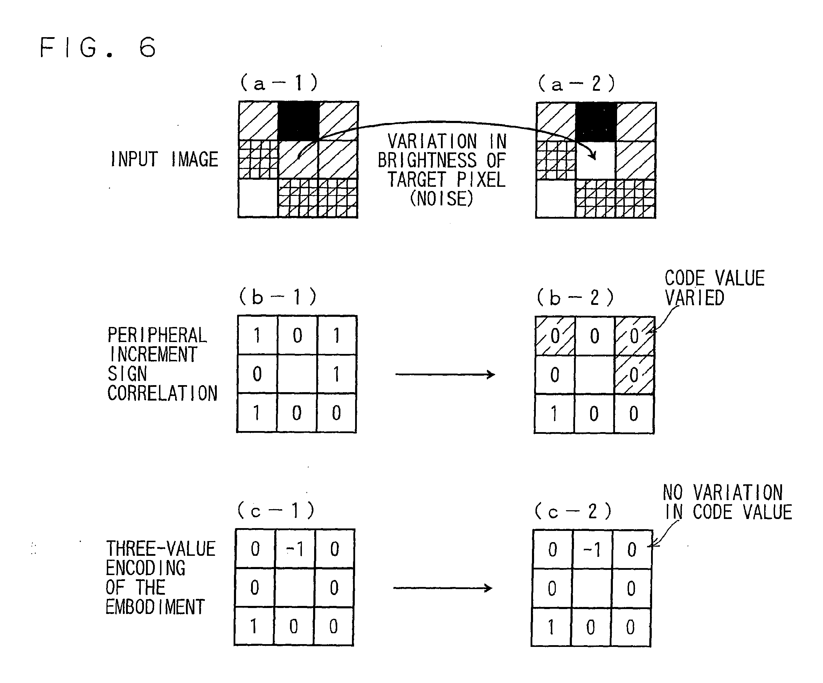

The fact that a configuration which is robust against the variation caused by noises or the like can be achieved by converting into three value as in this embodiment when the target pixel/peripheral pixel brightness difference encoding unit 101 executes encoding in Steps S101 and S201 instead of binarizing with 0/1 as in the peripheral increment sign correlation (see Sato's Document 1) in the related art is shown in Fig. 6.

When the input image is as shown under (a-1) in Fig. 6, in the peripheral increment sign correlation, it is encoded with 0/1 as shown under (b-1) by comparing the largeness between the target pixel at the center and the peripheral pixels (in this case, eight adjacent pixels).

On the other hand, in the method in this embodiment, the brightness differences are encoded as shown under (c-1) by the three-value encoding. When the brightness of the target pixel is varied because a slight variation such as a noise is applied to the image and hence the input as shown in (a-2) is resulted, the largeness is inverted between the target pixel and the peripheral pixels, and hence the state as shown in (b-2) is resulted in the peripheral increment sign correlation.

Since a code change occurs in hatched areas in (b-2), it is judged that a variation is occurred in the area in which no variation is supposed to occur (a varied area is generated due to incoming of a person or the like) . On the other hand, according to the method in this embodiment, a state shown under (c-2) is resulted, and hence the result of encoding is not changed, and hence the excessive detection can be avoided.

In other words, as shown in Fig. 6, the code can be inverted easily between the pixels having the brightness difference close to the criterion of 0/1 (having the brightness difference close to zero) by the slight variation such as a noise in the peripheral increment sign correlation (in the hatched area in (b-2), while the code 0 is assigned stably according to the method in this embodiment, and hence the configuration which is robust against the variation is achieved.

(6) Modification

The invention is not limited to the embodiment shown above, and various modifications may be made without departing from the scope of the invention.

For example, in the varied area integrating unit 107, $Result_b(x, y)$ and $Result_c(x, y)$ may be added after having applied a predetermined weight. Then, it may be judged that the variation has occurred when the sum exceeds a reference value.

This embodiment may be used for detecting an area of an incomer by image monitoring, or for detecting an area where persons may exist for capturing motions or recognizing gestures of the persons in the image.

**Claims**

**1.** An apparatus for detecting a varied area in an input image, comprising:

a first encoder that generates first brightness difference codes by encoding the brightness differences between a first target pixel in a learned image and respective first peripheral pixels in the periphery thereof into three-value brightness difference codes which respectively indicate a case in which they are smaller than a threshold value TH1, a case in which they are in the range from the threshold value TH1 to a threshold value TH2, and a case in which they are larger than the threshold value TH2;

a second encoder that generates second brightness difference codes by encoding the brightness differences between a second target pixel in the input image which corresponds to the first target pixel and respective second peripheral pixels in the periphery thereof into three-value brightness difference codes which respectively indicate a case in which they are smaller than the threshold value TH1, a case in which they are in the range from the threshold value TH1 to the threshold value TH2, and a case in which they are larger than the threshold value TH2;
a first judging unit that obtains a first variation result by judging the presence or absence of variation for the respective second peripheral pixels in the input image on the basis of the difference between the first brightness difference codes and the second brightness difference codes;
a first searching unit that searches pixels whose brightness difference from the first target pixel is not larger than a threshold value TH3 and pixels whose brightness difference from the first target pixel is not smaller than a threshold value TH4 from the first target pixel in the learned image in the plurality of directions and stores the same respectively as learned reference pixels;
a second judging unit that obtains a second variation result by judging the presence or absence of variation in the respective second peripheral pixels in the input image on the basis of whether or not there is a change between the brightness difference between the first target pixel in the learned image and the learned reference pixels and the brightness difference between the second target pixel in the input image and the input reference pixels as pixels in the input image which correspond to the learned reference pixels; and
an integrating unit that determines the presence or absence of variation for the respective second peripheral pixels in the input image on the basis of the first variation result and the second variation result.

2. The apparatus of Claim 1, wherein the integrating unit determines that a variation in the peripheral pixels is present when there is a variation in either one of the first variation result and the second variation result.

3. The apparatus of Claim 1, wherein the integrating unit determines that a variation in the peripheral pixels is present when the sum of the first variation result added with a first weight and the second variation result added with a second weight is equal to or larger than a predetermined value.

4. A method for detecting a varied area in an input image, comprising:

generating first brightness difference codes by encoding the brightness differences between a first target pixel in a learned image and respective first peripheral pixels in the periphery thereof into three-value brightness difference codes which respectively indicate a case in which they are smaller than a threshold value TH1, a case in which they are in the range from the threshold value TH1 to a threshold value TH2, and a case in which they are larger than the threshold value TH2;
generating second brightness difference codes by encoding the brightness differences between a second target pixel in the input image which corresponds to the first target pixel and respective second peripheral pixels in the periphery thereof into three-value brightness difference codes which respectively indicate a case in which they are smaller than the threshold value TH1, a case in which they are in the range from the threshold value TH1 to the threshold value TH2, and a case in which they are larger than the threshold value TH2;
obtaining a first variation result by judging the presence or absence of variation for the respective second peripheral pixels in the input image on the basis of the difference between the first brightness difference codes and the second brightness difference codes,
searching pixels whose brightness difference from the first target pixel is not larger than a threshold value TH3 and pixels whose brightness difference from the first target pixel is not smaller than a threshold value TH4 from the first target pixel in the learned image in the plurality of directions and storing the same respectively as learned reference pixels;
obtaining a second variation result by judging the presence or absence of variation in the respective second peripheral pixels in the input image on the basis of whether or not there is a change between the brightness difference between the first target pixel in the learned image and the learned reference pixels and the brightness difference between the second target pixel in the input image and the input reference pixels as pixels in the input image which correspond to the learned reference pixels; and
determining the presence or absence of variation for the respective second peripheral pixels in the input image on the basis of the first variation result and the second variation result.

5. The method of Claim 4, wherein the determining determines that a variation in the peripheral pixels is present when there is a variation in either one of the first variation result and the second variation result.

6. The method of Claim 4, wherein the determining determines that a variation in the peripheral pixels is present when the sum of the first variation result added with a first weight and the second variation result added with a second weight is equal to or larger than a predetermined value.

7. A recording medium including a program for causing a computer to execute a process of detecting a varied area in an input image, the program comprising instructions of:

generating first brightness difference codes by encoding the brightness differences between a first target pixel in a learned image and respective first peripheral pixels in the periphery thereof into three-value brightness difference codes which respectively indicate a case in which they are smaller than a threshold value TH1, a case in which they are in the range from the threshold value TH1 to a threshold value TH2, and a case in which they are larger than the threshold value TH2;

generating second brightness difference codes by encoding the brightness differences between a second target pixel in the input image which corresponds to the first target pixel and respective second peripheral pixels in the periphery thereof into three-value brightness difference codes which respectively indicate a case in which they are smaller than the threshold value TH1, a case in which they are in the range from the threshold value TH1 to the threshold value TH2, and a case in which they are larger than the threshold value TH2;

obtaining a first variation result by judging the presence or absence of variation for the respective second peripheral pixels in the input image on the basis of the difference between the first brightness difference codes and the second brightness difference codes,

searching pixels whose brightness difference from the first target pixel is not larger than a threshold value TH3 and pixels whose brightness difference from the first target pixel is not smaller than a threshold value TH4 from the first target pixel in the learned image in the plurality of directions and storing the same respectively as learned reference pixels;

obtaining a second variation result by judging the presence or absence of variation in the respective second peripheral pixels in the input image on the basis of whether or not there is a change between the brightness difference between the first target pixel in the learned and the learned reference pixels and the brightness difference between the second target pixel in the input image and the input reference pixels as pixels in the input image which correspond to the learned reference pixels; and

determining the presence or absence of variation for the respective second peripheral pixels in the input image on the basis of the first variation result and the second variation result.

8. The recording medium of Claim 7, wherein the instruction of determining comprises determining that a variation in the peripheral pixels is present when there is a variation in either one of the first variation result and the second variation result.

9. The recording medium of Claim 7, wherein the instruction of determining comprises determining that a variation in the peripheral pixels is present when the sum of the first variation result added with a first weight and the second variation result added with a second weight is equal to or larger than a predetermined value.

F I G. 1

FIRST VARIATION DETECTION UNIT 110

LEARNED
BACKGROUND
IMAGE

INPUT IMAGE

101

TARGET PIXEL /
PERIPHERAL PIXEL
BRIGHTNESS DIFFERENCE
ENCODING UNIT

102

BRIGHTNESS DIFFERENCE
CODE STORING UNIT

103

VARIATION JUDGING UNIT

107

VARIATION AREA
INTEGRATING
UNIT

VARIATION
AREA

104

REFERENCE PIXEL
SEARCHING UNIT

105

REFERENCE PIXEL
POSITION STORING UNIT

VARIATION JUDGING UNIT

SECOND VARIATION DETECTION UNIT 111

106

10

# FIG. 2

| S101 | | S103 |
|---|---|---|
| ENCODING LEARNED BACKGROUND IMAGE BY TARGET PIXEL / PERIPHERAL PIXELS BRIGHTNESS DIFFERENCE ENCODING UNIT 101 | | SEARCHING REFERENCE PIXELS FROM LEARNED BACKGROUND IMAGE BY REFERENCE PIXEL POSITION STORING UNIT 104 |

| S102 | | S104 |
|---|---|---|
| STORING CODE BY BRIGHTNESS DIFFERENCE CODE STORING UNIT 102 | | STORING REFERENCE PIXEL POSITION BY REFFERENCE PIXEL POSITION STORING UNIT 105 |

# FIG. 3

S201

ENCODING INPUT IMAGE BY TARGET PIXEL / PERIPHERAL PIXEL BRIGHTNESS DIFFERENCE ENCODING UNIT 101

S203

EXTRACTING BRIGHTNESS IN INPUT IMAGE ON THE BASIS OF REFERENCE PIXEL POSITION OBTAINED FROM REFERENCE PIXEL POSITION STORING UNIT 105

S202

EXTRACTING VARIED AREA BY COMPARISON BETWEEN CODE OBTAINED IN S201 AND CODE OBTAINED BY BRIGHTNESS DIFFERENCE CODE UNIT 102

S204

EXTRACTING VARIED AREA BY COMPARISON BETWEEN BRIGHTNESS DIFFERENCE OBTAINED IN S203 AND BRIGHTNESS DIFFERENCE IN LEARNED BACKGROUND IMAGE

INTEGRATING VARIED AREAS — S205

EP 1 833 019 A2

FIG. 4

TARGET PIXEL

PERIPHERAL PIXELS

FIG. 5

REFERENCE
PIXEL

$C_0^-$

$C_0^+$

TARGET PIXEL

$C_1^-$

$C_1^+$

$C_2^-$

$C_2^+$

# FIG. 6

(a-1)

(a-2)

INPUT IMAGE

VARIATION IN
BRIGHTNESS OF
TARGET PIXEL
(NOISE)

(b-1)

(b-2)

CODE VALUE
VARIED

PERIPHERAL
INCREMENT
SIGN
CORRELATION

| 1 | 0 | 1 |
|---|---|---|
| 0 |   | 1 |
| 1 | 0 | 0 |

| 0 | 0 | 0 |
|---|---|---|
| 0 |   | 0 |
| 1 | 0 | 0 |

(c-1)

(c-2)

NO VARIATION
IN CODE VALUE

THREE-VALUE
ENCODING
OF THE
EMBODIMENT

| 0 | -1 | 0 |
|---|----|---|
| 0 |    | 0 |
| 1 | 0  | 0 |

| 0 | -1 | 0 |
|---|----|---|
| 0 |    | 0 |
| 1 | 0  | 0 |

EP 1 833 019 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006060266 A

### Non-patent literature cited in the description

- **KENTARO TOYAMA ; JOHN KRUMM ; BARRY BRUMITT ; BRIAN MEYRRS.** Wallflower: Principles and practice of background maintenance. *Proceedings of the 7th IEEE International Conference on Computer Vision (ICCV 1999,* September 1999, 255-261
- **YUTAKA SATO ; SHUNICHI KANEKO ; SATORU IGARASHI.** Detection and Separation of a robust object on the basis of Peripheral Increment Sign Correlation. *Transactions of The Institute of Electronics, Information and Communication Engineers,* December 2001, vol. J84-D-II (12), 2585-2594
- **YUTAKA SATOH ; SHUN'ICHI KANEKO ; SATORU IGARASHI.** Robust Object Detection and Segmentation by Peripheral Increment Sign Correlation Image. *Systems and Computers,* June 2004, vol. 35 (9), 70-80
- **YUTAKA SATO ; KATSUHIKO SAKAGAMI.** Robust Background Subtraction by Bi-polar radial reach correlation. *IEICE PRMU2004-224,* March 2005, 73-78
- **YUTAKA SATOH ; KATSUHIKO SAKAUE.** Robust Background Subtraction based on Bi-polar Radial Reach Correlation. *Proceedings of the IEEE International Conference on Computers, Communications, Control and Power Engineering (TENCON05,* November 2005, 998-1003